# FASCICULE DE BREVET EUROPEEN

(11) **EP 1 124 392 B1**
(45) Date de publication et mention de la délivrance du brevet: **13.02.2013**
(21) Numéro de dépôt: 00403623.2
(22) Date de dépôt: 21.12.2000
(51) Int. Cl.: H04W 88/06

(54) **Terminal de télécommunication mobile mixte pour l'exploitation avec un premier réseau collectif et un second réseau local préferentiel**
Mehrfachmodus Mobilendgerät zur Benutzung in einem ersten kollektiven Netz und in einem zweiten bevorzugten Netz
Mixed mobile telecommunications terminal for use in a first collective network and a second preferred network

(30) Priorité: 06.01.2000 FR 0000121
(43) Date de publication de la demande: 16.08.2001
(73) Titulaire: Alcatel Lucent, 75007 Paris (FR)
(72) Inventeur: Ricard, Jocelyn, 78170 La Celle St. Cloud (FR); Bourque, Francis, 31470 Saint Lys (FR)
(74) Mandataire: Sciaux, Edmond

(56) Documents cités:
- EP-A- 0 660 626
- EP-A- 0 781 064
- EP-A- 0 858 237

## Description

La présente invention concerne le domaine des télécommunications et plus particulièrement les systèmes de téléphonie mobile pouvant se connecter à un réseau de télécommunication fixe.

Les réseaux de radiotélécommunications utilisent aujourd'hui principalement des techniques numériques de transmission du signal. La radiotéléphonie numérique comporte principalement deux familles de normes : les normes de téléphonie mobile pour les réseaux cellulaires collectifs telles que le GSM, DCS, ou UMTS, et les normes de téléphonie dite sans fil telles que le Bluetooth ou DECT, permettant de relier un téléphone sans fil à un équipement radio fixe relié au réseau filaire.

On note que la spécification de normes telles que le GSM a permis une large diffusion de la téléphonie mobile grâce à leur confort d'utilisation et à la bonne qualité des communications.

De manière analogue, les téléphones sans fil répondant par exemple à la norme DECT jouissent d'une popularité croissante auprès des consommateurs, car ils permettent une certaine liberté de mouvement pour les utilisateurs.

Afin de faciliter la vie des utilisateurs de terminaux de radiocommunications, il a été proposé de créer des terminaux mobiles mixtes qui permettraient de traiter des appels suivant ces deux familles de normes sans changer de combiné téléphonique. Un terminal mixte permet alors d'utiliser soit la ligne « mobile », c'est-à-dire la ligne de télécommunications établie à l'aide du réseau de télécommunications mobiles, soit la ligne « filaire », c'est-à-dire la ligne établie à l'aide d'un équipement fixe d'un réseau local préférentiel, assurant la connexion directe au réseau commuté public.

Ainsi, lorsque l'utilisateur est dans la zone de couverture d'un réseau local auprès duquel le terminal peut s'enregistrer, il peut utiliser sa ligne filaire, ce qui lui permet de bénéficier d'un coût réduit pour ses communications.

Et avec le même combiné, l'utilisateur jouit des avantages du réseau mobile lorsqu'il est en déplacement en utilisant la ligne « mobile ».

Toutefois, un problème pour ces terminaux mixtes consiste à définir quand le changement s'opère entre le mode fixe et le mode mobile et vice-versa, étant entendu que le terminal doit s'enregistrer auprès d'un réseau local préférentiel aussi souvent que possible pour réduire le coût des communications.

Actuellement, on connaît deux modes de recherche de réseau local préférentiel permettant de basculer en mode « filaire » : un mode automatique ou un mode manuel.

En mode automatique, un équipement radio fixe est recherché constamment, indépendamment de son utilisation réelle. Ainsi, la recherche est effectuée que le terminal se trouve dans la zone de couverture d'un réseau local préférentiel auprès duquel il peut s'enregistrer ou non. Cette recherche d'un équipement radio fixe conduit à une consommation importante d'énergie du terminal, ce qui réduit considérablement son autonomie.

Cet inconvénient est encore aggravé lorsque le terminal est associé à plusieurs équipements fixes, car tous ces équipements sont continûment recherchés en mode automatique.

En mode manuel, l'utilisateur commute le fonctionnement du terminal du mode « mobile » en mode « filaire » ou vice-versa. Ce mode est incommode pour l'utilisateur qui doit se souvenir de commander la commutation à chaque fois qu'il se trouve à l'intérieur de la zone de couverture d'un réseau local préférentiel associé à son terminal. Or, étant donné que le terminal fonctionne partout en mode « mobile », l'utilisateur peut facilement oublier d'opérer la commutation en mode « filaire ».

Un autre exemple est dans le document EP0858237, NOKIA, 12 Août 1998.

La présente invention vise à pallier les inconvénients de l'art antérieur en proposant un terminal de télécommunication mobile mixte dont l'autonomie peut être optimisée et la qualité du service rendu améliorée.

A cet effet, l'invention a pour objet un terminal de télécommunication mobile mixte apte à fonctionner avec des stations de base d'un réseau cellulaire collectif et au moins un équipement fixe d'au moins un réseau local préférentiel de téléphonie sans fil, le terminal comportant des moyens de communication avec chacun desdits réseaux, et des moyens de commutation, ces moyens de commutation comportant des moyens de recherche d'un équipement fixe d'un réseau local et commandant les moyens de communication pour fonctionner avec l'un ou l'autre desdits réseaux en fonction du résultat de recherche de réseau des moyens de recherche, caractérisé en ce qu'il comprend des moyens de programmation et de traitement d'événements déclencheurs d'une recherche du ou des équipements fixes des réseaux locaux avec lesquels le terminal peut fonctionner, ces moyens de programmation et de traitement activant les moyens de recherche suivant l'avènement des événements déclencheurs programmés.

Le terminal selon l'invention peut comporter une ou plusieurs des caractéristiques suivantes :
- les moyens de programmation et de traitement sont programmables par l'utilisateur pour définir les évènements déclencheurs individuellement pour chaque réseau local,
- l'évènement déclencheur est constitué par l'appui d'une séquence prédéfinie de touches, associée à une commande du terminal autre que celle de la commutation des moyens de communication à fonctionner avec un réseau local préférentiel,
- il comporte des moyens d'évaluation de la charge de trafic d'un réseau local en fonction du temps et en ce que l'événement déclencheur est constitué par le passage de la charge de trafic du réseau local en dessous d'un seuil prédéfini, notamment par l'utilisateur,
- il comporte des moyens de mémorisation de la fréquence d'utilisation de chaque réseau par le terminal et les moyens de commutation sont activés par les moyens de programmation et de traitement en fonction de la fréquence d'utilisation desdits réseaux par l'utilisateur,
- il comporte des moyens de calculs de probabilités de la fréquence d'utilisation du terminal avec chaque réseau et l'évènement déclencheur est le franchissement d'un seuil de probabilité de la fréquence d'utilisation dans le réseau local,
- il comporte des moyens permettant à l'utilisateur de définir ladite valeur seuil,
- il comporte des moyens de localisation des équipements fixes des réseaux locaux en fonction des informations fournies par le réseau cellulaire collectif et l'événement déclencheur est constitué par le fait que le terminal se trouve dans une cellule du réseau collectif se chevauchant avec la zone de couverture d'un réseau local de téléphonie sans fil,
- il comporte des moyens pour mémoriser l'identité cellule du réseau collectif dans laquelle se trouve le réseau local, et l'événement déclencheur est constitué de la réception d'un signal représentant l'identité de la station de base correspondant à l'identité de la cellule mémorisée,
- les moyens de commutation assurent la commutation sur un réseau local recherché uniquement lorsque lesdits moyens de recherche détectent un signal émis par un équipement fixe du réseau local recherché pendant une période prédéfinie suivant l'avènement d'un événement déclencheur associé.

D'autres caractéristiques et avantages ressortiront de la description suivante, donnée à titre d'exemple, sans caractère limitatif, en regard des dessins annexés sur lesquels :
- la figure 1 est un schéma synoptique d'un terminal selon l'invention dans son environnement,
- la figure 2 est un schéma synoptique d'un terminal selon l'invention.

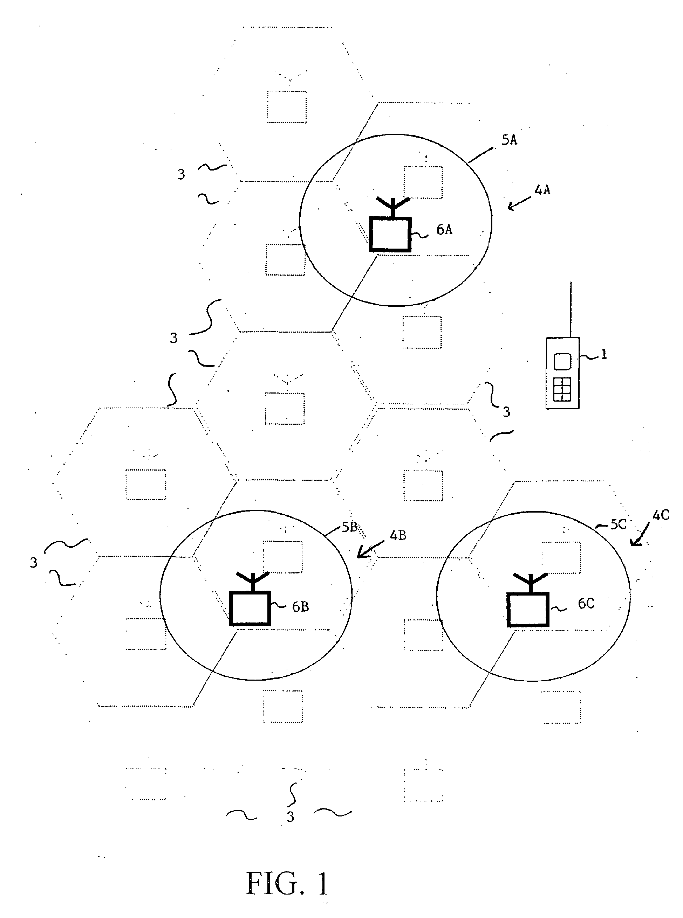

La figure 1 montre un schéma d'un terminal 1 de télécommunication mobile mixte qui est apte à fonctionner d'une part avec un réseau cellulaire collectif 2 du type GSM, DCS, UMTS ou analogue dont quelques cellules 3 avec leur station de base sont indiquées en traits pointillés, et d'autre part avec un ou plusieurs réseaux locaux préférentiels 4A, 4B, et 4C de téléphonie sans fil, par exemple du type DECT, CTS ou Bluetooth dont les zones de couverture respectives 5A, 5B, 5C et leurs équipements fixes associés respectifs 6A, 6B et 6C sont représentés. Les équipements fixes 6A, 6B, et 6C remplissent une fonction à peu près équivalente à celle des stations de base du réseau cellulaire collectif.

Selon le présent exemple de réalisation, chaque réseau local préférentiel 4A, 4B, 4C ne comporte qu'un seul équipement radio fixe 6A, 6B, 6C permettant de relier le terminal 1 directement au réseau téléphonique public commuté (RTPC), mais bien entendu, chaque réseau local peut avoir plusieurs équipements fixes et une couverture plus grande que celle qui est indiquée à titre d'exemple sur la figure 1.

Pour illustrer les avantages de l'invention, on considère en outre que le réseau 4A est celui du domicile de l'utilisateur, le réseau 4B, celui du lieu de travail de l'utilisateur et le réseau 4C celui, peu utilisé, d'une résidence secondaire de l'utilisateur.

De plus, il est entendu que le terminal 1 est autorisé de s'enregistrer auprès des équipements fixes 6A, 6B, 6C des réseaux locaux 4A, 4B et 4C.

Lorsque le terminal 1 se trouve à l'intérieur de la zone de couverture 5A, 5B ou 5C d'un des réseaux locaux 4A, 4B ou 4C de téléphonie sans fil, il peut fonctionner aussi bien avec le réseau cellulaire collectif 2 qu'avec le réseau local de téléphonie sans fil dans la zone de couverture duquel il se trouve.

Lorsque le terminal 1 est à l'extérieur des zones de couverture 5A, 5B ou 5C des réseaux locaux, il ne peut fonctionner qu'avec le réseau cellulaire collectif 2 et la recherche d'un équipement fixe d'un des réseaux locaux 4A, 4B ou 4C est forcément infructueuse et constitue donc une perte d'énergie.

Grâce aux caractéristiques innovantes du terminal 1 selon l'invention, décrites par la suite, cette perte d'énergie peut être considérablement réduite et l'autonomie du terminal peut être accrue.

Avantageusement, le mobile comprend un menu spécifique de configuration grâce auquel l'utilisateur peut choisir entre différents modes de recherche pour chaque réseau local. Comme cela sera expliqué plus en détail ci-après, l'utilisateur peut programmer lui-même les différents modes de recherche pour chaque réseau local en fonction de ses préférences et de ses habitudes d'utilisation.

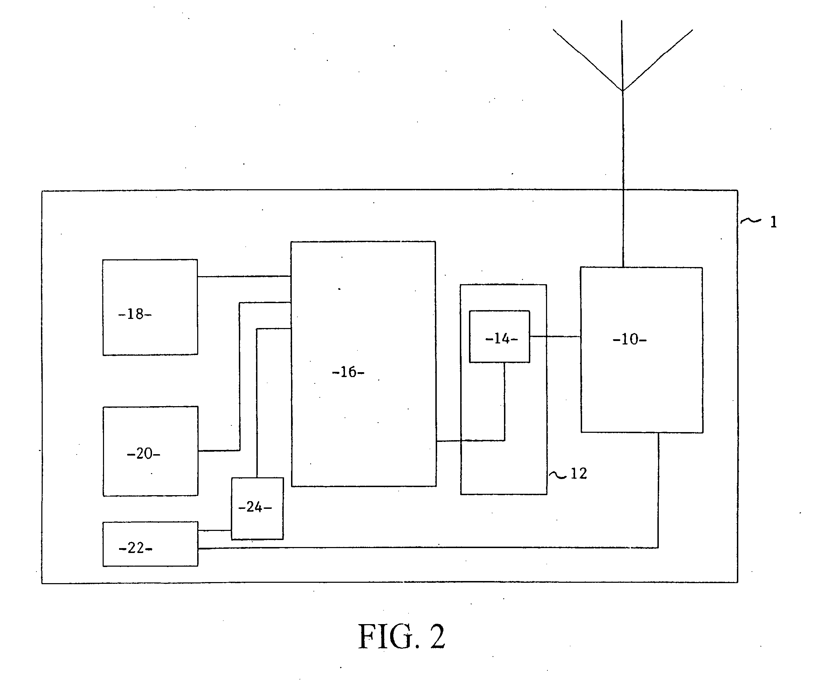

On se réfère maintenant au schéma synoptique de la figure 2.

Comme on le voit sur cette figure, le terminal 1 comprend des moyens de communication 10 avec chacun desdits réseaux 2, 4A, 4B, et 4C.

En outre, il comporte des moyens 12 de commutation pour commander les moyens de communication 10 de fonctionner avec tel ou tel réseau local ou collectif.

Toutefois, la commutation du réseau cellulaire collectif 2 vers un des réseaux locaux 4A, 4B ou 4C est subordonnée à la réception d'un signal de service émis en réponse à une recherche d'un réseau local de téléphonie sans fil par un équipement fixe de ce réseau local. Il s'agit en fait d'un contrôle préalable qu'une communication peut être passée avec le réseau local de téléphonie sans fil dont l'équipement fixe est recherché par le terminal selon l'invention.

A cet effet, les moyens de commutation comprennent des moyens 14 de recherche d'un équipement fixe 6A, 6B ou 6C auprès duquel le terminal 1 est autorisé à s'enregistrer.

Dans le cas d'une recherche positive suite à un échange radio par l'intermédiaire des moyens 10 de communication, les moyens 14 de recherche reçoivent un signal de service indiquant qu'une communication peut être passée par le réseau local recherché.

Dans le cas d'une recherche négative, aucun signal de service n'est reçu et, par conséquent, la commutation vers le réseau recherché ne peut pas être opérée.

Afin de réduire les recherches inutiles des réseaux locaux de téléphonie sans fil tout en évitant le mode manuel fastidieux pour l'utilisateur, le terminal 1 comprend, raccordés aux moyens 12 de commutation, des moyens 16 de programmation et de traitement d'événements déclencheurs d'une recherche du ou des équipements fixes des réseaux locaux avec lesquels le terminal peut fonctionner.

Suite à l'avènement d'un événement déclencheur, les moyens 16 de programmation et de traitement activent les moyens 14 de recherche pour rechercher un ou des équipements fixes des réseaux locaux préférentiels auquel l'événement en cause est associé.

Si la recherche se déroule de manière positive telle que décrite ci-dessus, alors les moyens 12 de commutation commandent aux moyens 10 de communication de changer de mode opératoire et de passer par la suite les communications par le réseau local auprès duquel le terminal a réussi à s'enregistrer.

De préférence ces moyens 16 sont programmables par l'utilisateur du terminal même.

Selon un développement de la présente invention, les moyens 12 assurent la commutation sur un réseau local recherché uniquement lorsque les moyens 14 de recherche détectent un signal émis par un équipement fixe du réseau local recherché pendant une période limitée suivant l'avènement d'un événement déclencheur associé.

Cette période limitée peut être définie et programmée par l'utilisateur ou par le fabriquant du terminal 1.

Les événements déclencheurs sont par exemple l'appui sur une touche ou une séquence prédéfinie d'appuis de touches du terminal 1.

Selon un mode de réalisation particulièrement avantageux, un tel événement déclencheur est constitué par l'appui d'une séquence prédéfinie de touches, associée à une autre commande du terminal que celle de la recherche d'un réseau local préférentiel.

Ainsi par exemple, lorsque le terminal comporte en outre un agenda électronique ou des moyens pour communiquer par l'Internet, la consultation des rendez-vous professionnels ou la consultation des messages électroniques professionnels peut être mémorisée en tant qu'événement déclencheur de la recherche du réseau local 4B du lieu de travail de l'utilisateur.

Une telle séquence d'appui de touches peut également consister en la composition d'un numéro d'appel particulier auquel on associe la recherche d'un réseau local préférentiel.

En particulier, un appel vers un autre réseau local que celui dans lequel se trouve le terminal ne déclenchera pas de recherche des équipements fixes associés à ce réseau local.

Selon un autre mode de réalisation particulièrement avantageux avec un réseau local peu utilisé par l'utilisateur, comme par exemple le réseau 4C de la résidence secondaire de l'utilisateur, le terminal 1 comporte des moyens 18 de localisation des équipements fixes des réseaux locaux en fonction des informations fournies par le réseau cellulaire collectif 2. Les moyens 18 de localisation reçoivent par exemple un identifiant de la cellule du réseau collectif 2 dans laquelle se trouve le terminal.

Pour ce cas, l'événement déclencheur est par exemple constitué par le fait que le terminal se trouve dans une cellule du réseau collectif se chevauchant avec la zone de couverture d'un réseau local de téléphonie sans fil. En effet, lorsque le terminal 1 se trouve dans une cellule du réseau collectif 2 se chevauchant avec la zone de couverture par exemple 5C du réseau local 4C, la probabilité est très forte qu'il puisse s'enregistrer auprès de l'équipement fixe 6C de ce réseau et ainsi bénéficier d'un coût réduit pour ses communications. Lorsque les moyens 18 de localisation retrouvent dans une liste mémorisée et programmée par l'utilisateur, l'identifiant de la cellule dans laquelle se trouve le terminal 1, les moyens 16 de programmation et de traitement déclenchent la recherche du réseau local de téléphonie sans fil associé à cet événement.

En conséquence, la recherche d'un réseau local est seulement engagée quand la position géographique du terminal rend son enregistrement auprès d'un réseau local probable.

Cette recherche selon la position géographique du terminal peut encore être rendue plus efficace en prenant en compte plus précisément les caractéristiques du paysage radio cellulaire qui entoure l'équipement fixe d'un réseau local déterminé.

Selon encore un autre mode de réalisation qui peut être combiné à ceux décrits ci-dessus, le terminal 1 comporte des moyens 20 d'évaluation de la charge de trafic d'un réseau local en fonction du temps.

Les informations relatives à la charge du réseau sont par exemple obtenues à partir d'un signal spécifique envoyé par une station de base du réseau collectif ou à partir d'un signal transmis par l'équipement fixe du réseau local.

On entendra au sens du présent brevet par "charge du réseau" le paramètre qui mesure l'encombrement du ou des réseaux (facteur de saturation). Ce paramètre donne des informations sur la difficulté probable de se connecter à un réseau pour cause de saturation par exemple. Ceci peut être important lorsque le réseau local est volontairement sous-dimensionné, par exemple parce que les pics de trafic sont peu fréquents et ne justifient pas un investissement lourd pour agrandir la capacité du réseau local pour connecter un nombre très élevé d'utilisateurs.

Pour ce mode de réalisation l'événement déclencheur est constitué par le passage de la charge de trafic du réseau local en dessous d'un seuil prédéfini, notamment par l'utilisateur. Quand le réseau est donc saturé ou presque, une recherche inutile du réseau local peut être évitée.

Bien entendu, d'autres critères définis par exemple par le constructeur du mobile et liées au terminal mobile 1 et/ou aux équipements fixes des réseaux locaux peuvent être pris en compte pour la définition des événements déclencheurs.

Selon encore un autre mode de réalisation, l'événement déclencheur est défini par rapport aux habitudes de l'utilisateur.

Ainsi, l'utilisateur sait qu'habituellement, il est à son domicile à partir de 20h jusqu'à 8h du lendemain et au travail entre 8h30 et 19h du lundi au vendredi. Il peut donc programmer dans les moyens 16 ces plages horaires pour effectuer une recherche du réseau local adapté, c'est-à-dire une recherche du réseau 4A pour les plages horaires où il se trouve à domicile et du réseau 4B pendant ses heures de travail. L'utilisateur reste totalement libre d'utiliser cette option et peut définir lui-même les plages horaires de recherche.

Selon une variante plus évoluée de ce mode de réalisation, le terminal comprend des moyens 22 de mémorisation de la fréquence d'utilisation par le terminal 1 de chaque réseau, aussi bien les réseaux locaux 4A, 4B et 4C que le réseau cellulaire collectif 2.

On entendra par "fréquence d'utilisation des réseaux par le terminal" le nombre de fois par unité de temps que le terminal fonctionne avec tel ou tel réseau.

De plus, le terminal comprend, raccordés aux moyens 22, des moyens 24 de calcul de probabilités de la fréquence d'utilisation du terminal avec chaque réseau à partir de la fréquence d'utilisation mémorisée dans les moyens 22.

La "probabilité d'utilisation" est la probabilité avec laquelle l'utilisateur utilise un des réseaux locaux 4A, 4B 4C ou le réseau cellulaire collectif 2 à des moments particuliers de la journée ou de la semaine.

Pour ce mode de réalisation, l'évènement déclencheur est le franchissement d'un seuil de probabilité de la fréquence d'utilisation dans un réseau local spécifique associé à ce seuil. Lors du franchissement du seuil, les moyens 24 envoient un signal aux moyens 16, ce qui déclenche une recherche dans le réseau local associé à cet événement déclencheur.

Avantageusement, le seuil peut être défini par l'utilisateur lui-même par le menu de configuration du terminal.

Ce mode peut être considéré comme un mode auto-adaptatif, car il permet de prendre automatiquement en compte les habitudes d'utilisation du terminal par l'utilisateur.

Par ailleurs, pour chaque plage horaire associée à la recherche d'un équipement fixe déterminé, l'utilisateur peut définir la fréquence de recherche, par exemple toutes les x minutes, x étant un nombre entier. Toute autre unité de temps est aussi utilisable.

Grâce à la présente invention, l'utilisateur peut choisir pour chaque réseau local auprès duquel il peut s'enregistrer, un mode spécifique et adapté de recherche de l'équipement fixe.

Cela a pour avantage que des recherches inutiles d'un réseau local peuvent être évitées et qu'une bonne partie de l'énergie du terminal peut être sauvegardée. De plus, le terminal selon l'invention est d'une utilisation aisée et peut s'adapter automatiquement aux habitudes de l'utilisateur.

Par ailleurs, les différents modes de réalisation décrits ci-dessus peuvent être combinés entre eux.

## Revendications

1. Terminal (1) de télécommunication mobile mixte apte à fonctionner avec des stations de base d'un réseau cellulaire collectif et au moins un équipement fixe (6A ; 6B ; 6C) d'au moins un réseau local préférentiel de téléphonie sans fil (4A ; 4B ; 4C), le terminal comportant des moyens (10) de communication avec chacun desdits réseaux (2 ; 4A ; 4B ; 4C), et des moyens (12) de commutation, ces moyens (12) de commutation comportant des moyens (14) de recherche d'un équipement fixe (6A ; 6B ; 6C) d'un réseau local (4A ; 4B ; 4C) et commandant les moyens (10) de communication pour fonctionner avec l'un ou l'autre desdits réseaux (2 ; 4A ; 4B ; 4C) en fonction du résultat de recherche de réseau des moyens (14) de recherche, caractérisé en ce qu'il comprend des moyens (16) de programmation et de traitement d'événements déclencheurs d'une recherche du ou des équipements fixes (6A ; 6B ; 6C) des réseaux locaux (4A ; 4B ; 4C) avec lesquels le terminal (1) peut fonctionner, ces moyens (16) de programmation et de traitement activant les moyens (14) de recherche suivant l'avènement de l'évènement déclencheur programmé constitué par l'appui d'une séquence prédéfinie de touches associée à une commande du terminal autre que celle de la commutation des moyens de communication à fonctionner avec un réseau local préférentiel (4A ; 4B ; 4C)

2. Terminal selon la revendication 1, **caractérisé en ce que** les moyens (16) de programmation et de traitement sont programmables par l'utilisateur pour définir les évènements déclencheurs individuellement pour chaque réseau local.

3. Terminal selon l'une quelconque des revendications précédentes, **caractérisé en ce qu'**il comporte des moyens (20) d'évaluation de la charge de trafic d'un réseau local en fonction du temps et **en ce que** lesdit événement déclencheur comprennent l'événement déclencheur constitué par le passage de la charge de trafic du réseau local en dessous d'un seuil prédéfini, notamment par l'utilisateur.

4. Terminal selon l'une quelconque des revendications précédentes, **caractérisé en ce qu'**il comporte des moyens (22) de mémorisation de la fréquence d'utilisation de chaque réseau par le terminal et **en ce que** les moyens (12) de commutation sont activés par les moyens (16) de programmation et de traitement en fonction de la fréquence d'utilisation desdits réseaux par l'utilisateur.

5. Terminal selon la revendication 4, **caractérisé en ce qu'**il comporte des moyens (24) de calculs de probabilités de la fréquence d'utilisation du terminal avec chaque réseau et **en ce que** lesdit événement déclencheur comprennent le franchissement d'un seuil de probabilité de la fréquence d'utilisation dans le réseau local (4A ; 4B ; 4C).

6. Terminal selon la revendication 4 ou 5, **caractérisé en ce qu'**il comporte des moyens permettant à l'utilisateur de définir ladite valeur seuil.

7. Terminal selon l'une quelconque des revendications 1 à 6, **caractérisé en ce qu'**il comporte des moyens (18) de localisation des équipements fixes des réseaux locaux en fonction des informations fournies par le réseau cellulaire collectif et **en ce que** lesdit événement déclencheur comprennent l'événement déclencheur constitué par le fait que le terminal se trouve dans une cellule du réseau collectif se chevauchant avec la zone de couverture d'un réseau local de téléphonie sans fil.

8. Terminal selon la revendication 7, **caractérisé en ce qu'**il comporte des moyens pour mémoriser l'identité cellule du réseau collectif dans laquelle se trouve le réseau local, et **en ce que** lesdit événement déclencheur comprennent l'événement déclencheur constitué de la réception d'un signal représentant l'identité de la station de base correspondant à l'identité de la cellule mémorisée.

9. Terminal selon l'une quelconque des revendications 1 à 8, **caractérisé en ce que** les moyens (12) de commutation assurent la commutation sur un réseau local recherché uniquement lorsque lesdits moyens de recherche détectent un signal émis par un équipement fixe (6A ; 6B ; 6C) du réseau local recherché pendant une période prédéfinie suivant l'avènement d'un événement déclencheur associé.

## Claims

1. A combined mobile telecommunication terminal (1) capable of operating with base stations of a collective cellular network and at least one fixed equipment (6A; 6B; 6C) of at least one preferential wireless telephony local network (4A; 4B; 4C),the terminal comprising means (10) for communicating with each of said networks (2;4A; 4B; 4C), and means (12) for switching, these means (12) for switching comprising means (14) for searching for a fixed equipment (6A; 6B;6C) of a local network (4A; 4B; 4C) and ordering the means (10) for communicating in order to operate with either of said networks (2; 4A; 4B; 4C) depending on the network search result of the means (14) for searching, **characterized in that** it comprises means for (16) scheduling and processing events that trigger a search for fixed equipment(s) (6A; 6B; 6C) of local networks (4A; 4B; 4C) with which the terminal (1) may operate, these means (16) for scheduling and processing activating the means (14) researching following the occurrence of the scheduled trigger event constituted by the pressing of a predefined sequence of keys associated with a command of the terminal other than the command of switching the means of communicating to operate with a preferential local network (4A; 4B; 4C)

2. A terminal according to claim 1, **characterized in that** the means (16) for scheduling and processing are user-programmable in order to define the trigger events individually for each local network.

3. A terminal according to any one of the preceding claims, **characterized in that** it comprises means (20) for assessing the traffic load of a local network over time and **in that** said trigger event comprises the trigger event constituted by the local network's traffic load falling below a predefined threshold, particularly by the user.

4. A terminal according to any one of the preceding claims, **characterized in that** it comprises means (22) for memorizing the frequency that each network is used by the terminal and that the means (12) for switching are activated by the means (16) for scheduling and processing based on the frequency that said networks are used by the user.

5. A terminal according to claim 4, **characterized in that** it comprises means (24) for calculating probabilities of the terminal's frequency of use with each network and **in that** said trigger event comprises the crossing of a use frequency probability threshold within the local network (4A; 4B; 4C).

6. A terminal according to claim 4 or 5, **characterized in that** it comprises means that enable the user to define said threshold value.

7. A terminal according to one of the claims 1 to 6, **characterized in that** it comprises means (18) for locating fixed equipment of local networks based on the information provided by the collective cellular network and **in that** said trigger event comprises the trigger event constituted by the terminal being located within a cell of the collective network that overlaps with the coverage area of a local wireless telephony network.

8. A terminal according to claim 7, **characterized in that** it comprises means for saving the cell identity of the collective network in which the local network is located, and **in that** said trigger event comprises the trigger event constituted by receiving a signal that represents the identity of the base station that corresponds to the saved cell's identity

9. A terminal according to any one of the claims 1 to 8, **characterized in that** the means (12) for switching ensure switching to local network that is searched for only when said means for searching detected a signal emitted by a fixed equipment (6A; 6B; 6C) of the local network that is searched for during a predefined period following the occurrence of an associated trigger event.

## Patentansprüche

1. Kombiniertes mobiles Telekommunikationsendgerät (1), ausgelegt für den Betrieb mit Basisstationen eines kollektiven zellularen Netzwerks und mindestens einem ortsgebundenen Gerät (6A; 6B; 6C) mindestens eines bevorzugten drahtlosen lokalen Telefonnetzwerks (4A; 4B; 4C), wobei das Endgerät Mittel (10) zur Kommunikation mit einem jeden der besagten Netzwerke (2; 4A; 4B; 4C) sowie Schaltmittel (12) umfasst, wobei diese Schaltmittel (12) Suchmittel (14) zum Auffinden eines ortsgebundenen Geräts (6A; 6B; 6C) eines lokalen Netzwerks (4A; 4B; 4C) umfassen und die Mittel (10) zur Kommunikation für den Betrieb mit dem einen oder anderen der besagten Netzwerke (2; 4A; 4B; 4C) in Abhängigkeit des Ergebnisses der von den Suchmitteln (14) durchgeführten Netzwerksuche umfassen, **dadurch gekennzeichnet, dass** es Mittel (16) zur Programmierung und Verarbeitung von eine Suche des oder der ortsgebundenen Geräte (6A; 6B; 6C) der lokalen Netzwerke (4A; 4B; 4C), mit denen das Endgerät (1) betrieben werden kann, auslösenden Triggerereignissen umfasst, wobei diese Mittel (16) zur Programmierung und Verarbeitung die Suchmittel (14) im Anschluss an das Auftreten des programmierten Triggerereignisses, bestehend in der Betätigung einer vorgegebenen Folge von mit einer Steuerung des Endgeräts, welche eine andere ist als die Steuerung der Schaltung der Kommunikationsmittel für den Betrieb mit einem bevorzugten lokalen Netzwerk (4A; 4B; 4C), aktivieren.

2. Endgerät nach Anspruch 1, **dadurch gekennzeichnet, dass** die Mittel (16) zur Programmierung und Verarbeitung vom Benutzer programmiert werden können, um die Triggerereignisse für jedes lokale Netzwerk individuell zu definieren.

3. Endgerät nach einem beliebigen der vorstehenden Ansprüche, **dadurch gekennzeichnet, dass** es Mittel (20) zur Bewertung der Verkehrslast eines lokalen Netzwerks in Abhängigkeit von der Zeit umfasst, und dass das besagte Triggerereignis das Triggerereignis, welches darin besteht, dass die besagte Verkehrslast des lokalen Netzwerks einen vorgegebenen Grenzwert unterschreitet, umfasst, insbesondere durch den Benutzer.

4. Endgerät nach einem beliebigen der vorstehenden Ansprüche, **dadurch gekennzeichnet, dass** es Mittel (22) zum Speichern der Nutzungsfrequenz eines jeden Netzwerks durch das Endgerät umfasst, und dass die besagten Schaltmittel (12) durch die Mittel (16) zur Programmierung und Verarbeitung in Abhängigkeit von der Nutzungsfrequenz der besagten Netzwerke durch den Benutzer aktiviert werden.

5. Endgerät nach Anspruch 4, **dadurch gekennzeichnet, dass** es Mittel (24) zur Berechnung der Wahrscheinlichkeiten der Nutzungsfrequenz des Endgeräts mit jedem Netzwerk umfasst, und dass das besagte Triggerereignis das Überschreiten eines Wahrscheinlichkeitsgrenzwerts der Nutzungsfrequenz im lokalen Netzwerk (4A; 4B; 4C) umfasst.

6. Endgerät nach Anspruch 4 oder 5, **dadurch gekennzeichnet, dass** es Mittel umfasst, die es dem Benutzer ermöglichen, den besagten Grenzwert zu definieren.

7. Endgerät nach einem beliebigen der Ansprüche 1 bis 6, **dadurch gekennzeichnet, dass** es Mittel (18) zur Ortung der ortsgebundenen Geräte der lokalen Netzwerke in Abhängigkeit von den von dem kollektiven zellularen Netzwerk bereitgestellten Informationen umfasst, und dass das besagte Triggerereignis das Triggerereignis, welches darin besteht, dass sich das Endgerät in einer Zelle des kollektiven Netzwerk, welche sich mit dem Versorgungsbereich eines drahtlosen lokalen Telefonnetzwerks überlappt, umfasst.

8. Endgerät nach Anspruch 7, **dadurch gekennzeichnet, dass** es Mittel zum Speichern der Identität der Zelle des kollektiven Netzwerks, in welchem sich das lokale Netzwerk befindet, umfasst, und dass das besagte Triggerereignis das Triggerereignis, welches im Empfang eines die Identität der Basisstation, welche der Identität der gespeicherten Zelle entspricht, darstellenden Signals besteht, umfasst.

9. Endgerät nach einem beliebigen der Ansprüche 1 bis 8, **dadurch gekennzeichnet, dass** die Schaltmittel (12) das Umschalten auf ein gesuchtes lokales Netzwerk nur dann gewährleisten, wenn die besagten Suchmittel ein von einem ortsgebundenen Gerät (6A; 6B; 6C) des gesuchten lokalen Netzwerks während eines vorgegebenen Zeitraums im Anschluss an das Auftreten eines assoziierten Triggerereignisses ausgegebenes Signal erkennen.
